# EUROPEAN PATENT APPLICATION

(11) **EP 4 606 626 A1**
(43) Date of publication of application: **27.08.2025**
(21) Application number: 24159099.1
(22) Date of filing: 22.02.2024
(51) Int. Cl.: B60L 50/64, H01M 10/625, H01M 50/209, H01M 50/249, H01M 50/342, H01M 50/367

(54) **BATTERY MODULE WITH GAS VENTING CHANNEL**

(71) Applicant: VOLVO TRUCK CORPORATION, 405 08 Göteborg (SE)
(72) Inventor: ROUT, Dhirendra, 422 54 GÖTEBORG (SE); TINGBERG, Tobias, 435 39 MÖLNLYCKE (SE)
(74) Representative: Kransell & Wennborg KB

(57) **Abstract**

A battery module (100) for a vehicle comprising: a battery housing (102) holding a plurality of battery cells (104), each cell comprising a breakable gas vent (106) at an end portion of the respective battery cell; a layer of thermally insulating material (108) covering the plurality of breakable gas vents; a first abrasion resistant plate (110) arranged to cover the thermally insulating layer, the first abrasion resistant plate comprising a plurality of breakable openings (112), each breakable opening being located in alignment with a corresponding breakable gas vent; and a second abrasion resistant plate (114) arranged to cover the first abrasion resistant plate, the first and second abrasion resistant plates being configured to collectively form a vent channel (116) for guiding a gas flow expelled from any of the plurality of breakable openings.

## Description

### TECHNICAL FIELD

The disclosure relates generally to battery packs for vehicles. In particular aspects, the disclosure relates to a battery module comprising a venting channel for venting heated gas and particles during thermal runaway event. The disclosure can be applied to heavy-duty vehicles, such as trucks, buses, and construction equipment, among other vehicle types. The disclosure can be applied to marine vessels and the like and could also be used in stationary units such as buildings and stationary machinery. Although the disclosure may be described with respect to a particular vehicle, the disclosure is not restricted to any particular vehicle.

### BACKGROUND

Thermal runaway in battery packs for vehicles refers to a chain reaction of escalating heat generation within the battery cells. This process can be triggered by factors like overcharging, internal short circuits, or physical damage. As the temperature rises, it can lead to a self-perpetuating cycle, causing cells to heat up rapidly, potentially leading to gas release, fire, or even explosion. Managing this runaway reaction is critical to prevent severe damage to the battery pack, vehicle, and surrounding environment.

In the event of a thermal runaway, efficient management of hot gases and particles within the battery pack is crucial to prevent rapid thermal spread. Strategically designed chimneys and channels within the pack have been utilized to guide and channel hot gases, ensuring controlled pathways that inhibit thermal propagation and limit the acceleration of the runaway process. Vents strategically positioned within the pack are set to open at specific pressures, enabling the release of accumulated hot gases. Meanwhile, specialized trapping mechanisms are deployed at designated locations within the pack to contain and prevent particles from exiting. This containment is essential to mitigate the risk of these particles igniting external gases, reducing potential hazards outside the battery pack. Accordingly, it is desirable to provide improved battery module designs for mitigating damage caused by a thermal runaway event.

### SUMMARY

According to a first aspect of the disclosure, it is provided a battery module for a vehicle comprising a battery housing holding a plurality of battery cells, each cell comprising a breakable gas vent at an end portion of the respective battery cell; a layer of thermally insulating material covering the plurality of breakable gas vents; a first abrasion resistant plate arranged to cover the thermally insulating layer, the first abrasion resistant plate comprising a plurality of breakable openings, each breakable opening being located in alignment with a corresponding breakable gas vent; a second abrasion resistant plate arranged to cover the first abrasion resistant plate, the first and second abrasion resistant plates being configured to collectively form a vent channel for guiding a gas flow expelled from any of the plurality of breakable openings.

The described battery module offers advancements in vehicular safety, particularly in addressing the challenges posed by thermal runaway in battery cells. The incorporation of breakable gas vents in each battery cell is an important feature that allows for the controlled release of gases during thermal events, reducing the risk of pressure buildup within the cells, thus minimizing the potential for cell rupture or explosion.

The layer of thermally insulating material covering the gas vents serves as an effective barrier, isolating each cell and preventing the spread of heat to adjacent cells. By containing the thermal effects within a single affected cell, the design reduces the risk of a cascading failure across the battery module. The integration of the first and second abrasion-resistant plates further enhances this safety mechanism. The plates are configured to form a vent channel that guides the expelled gases in a controlled manner which ensures that the gases are safely vented out of the module, thereby reducing the risk of fire or explosion. The alignment of breakable openings in the first plate with the gas vents ensures that the gas flow is streamlined and does not affect neighboring cells, further enhancing the safety of the module.

The described battery module may also offer advantages in manufacturing efficiency and assembly simplicity due to its use of only two abrasion resistant plates to cover a plurality of battery cells, leading to a streamlined approach simplifying the production process by reducing the number of individual components required, leading to easier assembly and potentially lower production costs. The two-plate configuration, encompassing both the first abrasion-resistant plate with breakable openings and the second plate forming the vent channel, allows for a more straightforward assembly line process. This consolidation of parts not only enhances the manufacturability of the battery module but also contributes to its overall reliability and structural integrity, as fewer components typically mean fewer points of potential failure.

A general advantage of the described battery module is thus that in case of a thermal runaway event, gas can be ejected from the battery cell through the breakable gas vent, through the thermally insulating material and further through the breakable openings without diffusing laterally to effect adjacent cells.

Optionally, in some examples, including in at least one preferred example, the battery module features a first abrasion resistant plate arranged in contact with the thermally insulating layer. A technical benefit may include enhanced thermal management by ensuring close contact between the thermally insulating layer and the abrasion-resistant plate, improving the module's ability to withstand high temperatures and prevent thermal damage, and preventing gas flow in unwanted directions.

Optionally, in some examples, including in at least one preferred example, the thermally insulating material of the battery module is configured to dissipate at a location above the gas vent if exposed to a gas exhaust through the gas vent. A technical benefit may include the ability to localize thermal insulation breakdown, which could help in managing and directing gas flow in a controlled manner during thermal events.

Optionally, in some examples, including in at least one preferred example, the first abrasion resistant plate of the battery module is formed in a single piece. A technical benefit may include increased structural integrity and reduced complexity in manufacturing, leading to a more robust and reliable battery module design.

Optionally, in some examples, including in at least one preferred example, the first abrasion resistant plate of the battery module comprises mica. A technical benefit may include the use of mica for its excellent thermal resistance and electrical insulation properties, enhancing the safety and durability of the battery module.

Optionally, in some examples, including in at least one preferred example, the first abrasion resistant plate of the battery module comprises a reinforced plastic material. A technical benefit may include improved durability and resistance to mechanical stress, while maintaining light weight, contributing to the overall efficiency and lifespan of the battery module.

Optionally, in some examples, including in at least one preferred example, the second abrasion resistant plate of the battery module comprises mica. A technical benefit may include enhanced thermal and electrical insulation, similar to the first plate, providing an additional layer of protection and stability in extreme conditions.

Optionally, in some examples, including in at least one preferred example, the thermally insulating material of the battery module is a foam material. A technical benefit may include the lightweight and porous nature of foam, which can offer effective thermal insulation while allowing for controlled gas flow and dissipation.

Optionally, in some examples, including in at least one preferred example, the thermally insulating material of the battery module comprises at least one of polyurethane resin, aerogel blanket, glass fiber blanket, and hollow glass fiber strings. A technical benefit may include the selection of materials based on specific thermal and mechanical properties, allowing for customization of the module to suit different operational requirements and environments.

Optionally, in some examples, including in at least one preferred example, the breakable opening of the first abrasion resistant plate of the battery module comprises a perforated region. A technical benefit may include the facilitation of controlled gas release through predetermined weak points, contributing to safer and more predictable behavior during thermal events.

Optionally, in some examples, including in at least one preferred example, the battery module further comprises a battery control component arranged on each battery cell adjacent to the layer of thermally insulating material. A technical benefit may include improved battery management and monitoring, which can enhance the overall performance and safety of the battery module. The battery control component is thereby protected from a gas flow by the thermally insulating material.

Optionally, in some examples, including in at least one preferred example, a protective barrier is arranged between the battery control component and the thermally insulating material of the battery module. A technical benefit may include added protection for the battery control components from thermal and mechanical stresses, thereby enhancing the reliability and lifespan of the control system.

Optionally, in some examples, including in at least one preferred example, the protective barrier of the battery module comprises glass fiber. A technical benefit may include the use of glass fiber for its excellent thermal insulation and mechanical strength, providing robust protection against heat and physical damage.

Optionally, in some examples, including in at least one preferred example, the protective barrier of the battery module comprises a hollow glass fiber cord. A technical benefit may include enhanced thermal insulation due to the air trapped in the hollow fibers, along with the structural strength provided by the glass material, offering effective protection in a lightweight form.

Optionally, in some examples, including in at least one preferred example, the first abrasion resistant plate of the battery module is arranged to cover the battery control component. A technical benefit may include additional mechanical protection for the battery control component, safeguarding against external physical impacts and internal thermal effects.

Optionally, in some examples, including in at least one preferred example, a portion of the first abrasion resistant plate arranged to cover the battery control component of the battery module is elevated in relation to a portion of the first abrasion resistant plate arranged to cover the thermally insulating material. A technical benefit may include the creation of a designated space for the battery control components, ensuring adequate insulation and protection while maintaining the structural integrity of the module.

Optionally, in some examples, including in at least one preferred example, the second abrasion resistant plate of the battery module is substantially flat, and the vent channel is formed between the second abrasion resistant plate and the portion of the first abrasion resistant plate arranged to cover the thermally insulating material. A technical benefit may include streamlined gas channeling and efficient venting, facilitated by the flat design of the second plate, which can contribute to effective thermal management and safety during operation. Furthermore, the vent channel is formed so that the battery control component is more effectively protected from a potential gas flow in the channel.

Optionally, in some examples, including in at least one preferred example, the first and second abrasion resistant plates of the battery module include alignment markings configured to facilitate alignment of the breakable openings with the corresponding breakable gas vents. A technical benefit may include easier assembly and reduced risk of misalignment during manufacturing, leading to more consistent performance and reliability of the gas venting system.

Optionally, in some examples, including in at least one preferred example, at least one of the first and second abrasion resistant plates of the battery module is configured to withstand a temperature of at least 700°C. A technical benefit may include significantly enhanced resistance to high temperatures, ensuring the structural integrity and functionality of the module in extreme thermal conditions.

According to a second aspect of the disclosure, there is provided a vehicle comprising a battery module according to any one of the preceding claims. A technical benefit may include the integration of this advanced battery module into vehicles, offering enhanced safety, efficiency, and reliability in vehicular applications, particularly in environments where thermal management is critical.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exploded view of an exemplary battery module according to an example.
**FIG. 2** is cross section view of an exemplary battery module according to an example.
**FIG. 3** is an exploded view of an exemplary battery module according to an example.
**FIG. 4** is an exploded view of an exemplary battery module according to an example.

### DETAILED DESCRIPTION

The detailed description set forth below provides information and examples of the disclosed technology with sufficient detail to enable those skilled in the art to practice the disclosure.

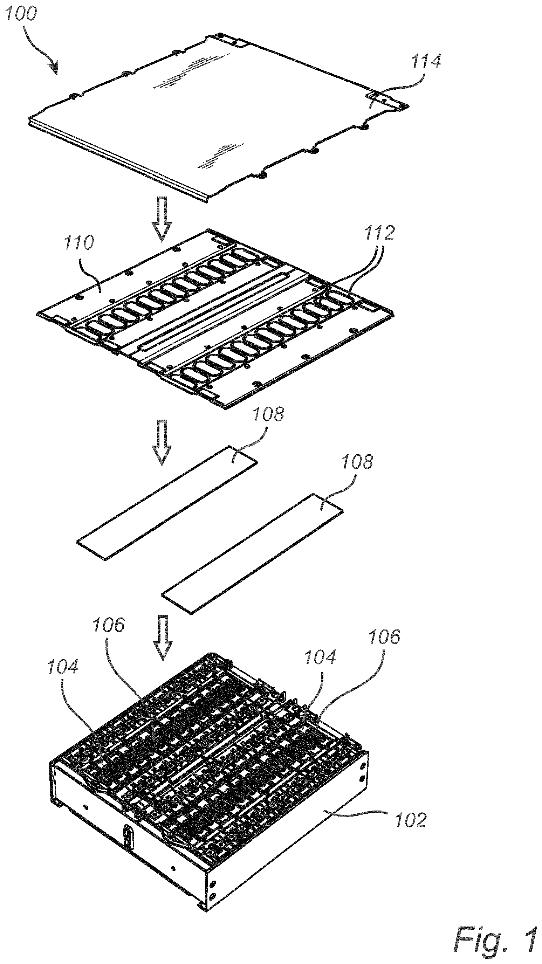

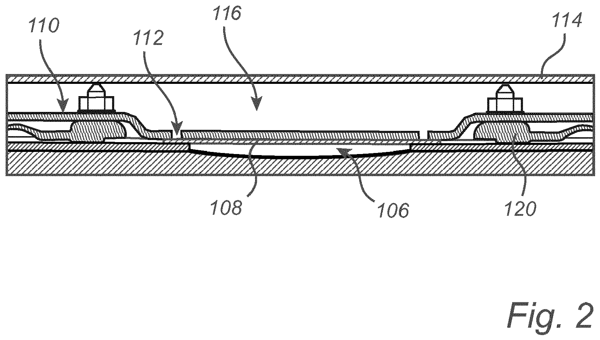

Fig. 1 is a perspective view of an exemplary battery module 100 for a vehicle and Fig. 2 is a side view of a cross section of the battery module 100 illustrating selected features. The battery module 100 comprises a battery housing 102 holding a plurality of battery cells 104. Each battery cell comprises a breakable gas vent 106 at an end portion of the respective battery cell 104. The breakable gas vent 106 of the battery cell 104 is configured to break and form a vent opening in the event of thermal runaway in the battery cell 104 to controllably release gas and heated particles from the battery cell 104. In the illustrated example, the battery cells 104 are rectangular cells having the breakable gas vent 106 of the battery cell 104 located on the top portion of the cell facing upwards in the illustration of Fig. 1. It should however be noted that both other shapes of the battery cells as well as other orientations of the cells and breakable gas vents are possible.

A layer of thermally insulating material 108 is arranged to cover the plurality of breakable gas vents 106. The thermally insulating material 108 which also may be referred to as a potting material may for example be a foam material or another type of porous material comprising at least one of polyurethane resin, aerogel blanket, glass fiber blanket and hollow glass fiber strings. Furthermore, the thermally insulating material 108 is configured to dissipate at a location above the gas vent 106 of the battery cell 104 if exposed to a gas exhaust through the gas vent 106. Heated gases and particles can thereby pass through the thermally insulating material 108 in a direction away from the battery cell 104.

The battery module 100 further comprises a first abrasion resistant plate 110 arranged to cover the layer of thermally insulating material 108, where the first abrasion resistant plate 110 comprises a plurality of breakable openings 112. Each breakable opening 112 is located in alignment with a corresponding breakable gas vent 106 of a respective battery cell 104. The battery module 100 is thereby configured so that in the event of thermal runaway, gas and heated particles ejected through the breakable gas vent 106 of the battery cell 104, through the thermally insulating material located above the battery cell to further break and pass through the breakable opening 112 of the first abrasion resistant plate 110.

Next, the battery module comprises a second abrasion resistant plate 114 arranged to cover the first abrasion resistant plate 110, the first and second abrasion resistant plates 110, 114 being configured to collectively form a vent channel 116 for guiding a gas flow expelled from any of the plurality of breakable openings 112. Each of the first and second abrasion resistant plates 110, 114 can be made from mica which has a high resistance to abrasion and elevated temperatures. Mica has a thermal conductivity of approximately of 0.3 W/mK. The abrasion resistant plates 110, 114 should be able to withstand temperatures in the range of 700-1300 °C and above depending on the type of battery cell used where LFP (Lithium Iron Phosphate) battery cells has a lower gas temperature as compared to NCA (Nickel Cobalt Aluminum) battery cells. The first and second abrasion resistant plates 110, 114 should also be able to withstand abrasion from the particles ejected from a cell during thermal runaway. Such particles may mainly consist of graphite. The desired properties of the abrasion resistant plates 110, 114 can also be achieved by reinforced plastic materials having an additive such as glass fibre. Composite materials incorporating mica or other heat and abrasion resistant materials could also be used.

The insulating layer should preferably be selected from materials having a lower thermal conductivity than the abrasion layer. Typically, a material having the required hardness to withstand abrasion cannot reach as low thermal conductivities as the foam materials used for thermal insulation. The thermal insulating material may for example have a thermal conductivity lower than 0.3 W/mK.

Moreover, each of the first and second abrasion resistant plate 110, 114 is formed in a single piece to facilitate assembly of the battery module and also to enable easy replacement of the plates if needed.

In the described battery module 100, gas and particles ejected from the battery cell 104 is thereby guided through the thermally insulating material 108 and through the breakable opening 112 of the first abrasion resistant plate 110, where it travels in the formed vent channel 116 towards an edge of battery module where it can be safely evacuated.

Fig. 2 is a sideview of the battery module of Fig. 1 illustrating the assembled battery module 100 where it can be seen that the thermally insulating material 108 is arranged directly on top of and in contact with the battery cells 104. The vent channel 116 formed between the first abrasion resistant plate 110 and the second abrasion resistant plate 114 can also be seen.

In Fig. 2, it is illustrated that the battery module may further comprise a battery control component 120 arranged on each battery cell 104 adjacent to the layer of thermally insulating material 108. The thermally insulating material 108 and the described design of the battery module thereby protects the battery control component 120 from heated gas and particles during a thermal runaway event, and the thermally insulating material 108 may also be arranged to reach all the way to the battery control component 120.

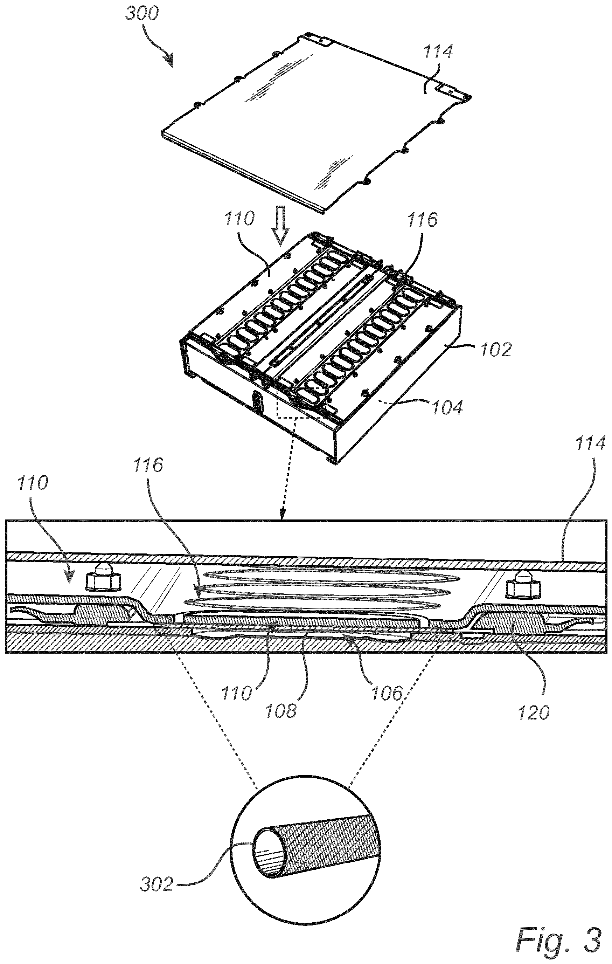

Fig. 3 schematically illustrates a battery module 300 further comprising a protective barrier 302 arranged between the battery control component and the thermally insulating material. The protective barrier 302 acts to provide additional protection for the battery control component 120. The protective barrier may advantageously comprise glass fiber which is both resilient to abrasion and which can withstand elevated temperatures. In an example, the protective barrier 302 comprises a hollow glass fiber cord where the air in the cord provides additional thermal insulation for the battery control component 120.

Moreover, the first abrasion resistant plate 110 is arranged to cover the battery control component 120. Thereby, the vent channel 116 for guiding a gas flow is entirely separated from the battery control component 120. It is also illustrated that a portion of the first abrasion resistant plate 100 arranged to cover the battery control component 120 is elevated in relation to a portion of the first abrasion resistant plate 110 arranged to cover the thermally insulating material 108. In the illustrated example where the second abrasion resistant plate 114 is substantially flat, the vent channel 116 is mainly formed between the second abrasion resistant plate 114 and the portion of the first abrasion resistant plate 110 arranged to cover the thermally insulating material 108, thereby further separating a potential gas flow from the battery control components 120.

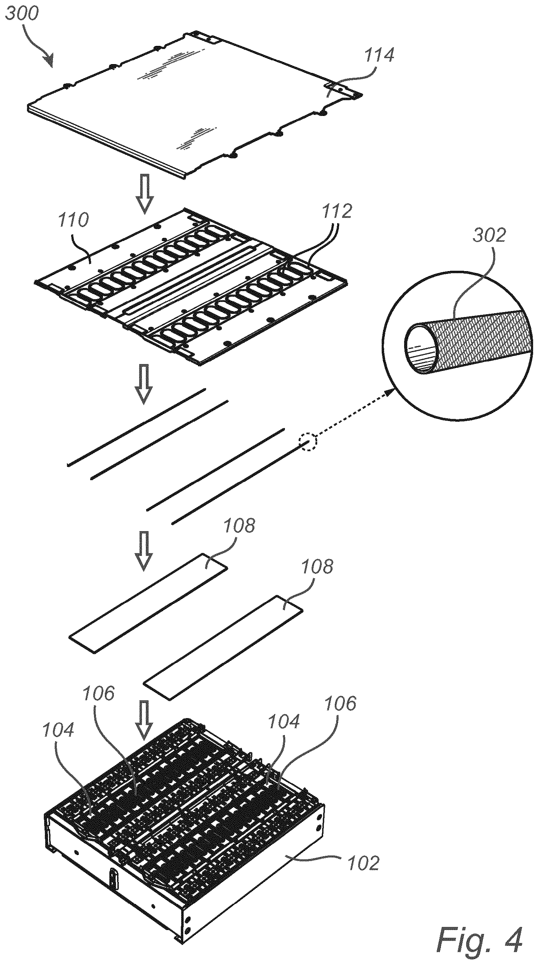

Fig. 4 schematically illustrates the battery module 300 and how the battery module 300 may be assembled starting with the battery housing 102 comprising a plurality of battery cells. 104. A thermally insulating material 108 is arranged on the battery cells 104, and the protective barrier 302, here illustrated in the form of a hollow glass fiber cord, may be placed on the battery cells before or after the thermally insulating material 108. The first and second abrasion resistant plates are subsequently placed on the battery housing to form the battery module. Correct placement of the first and second abrasion resistant plates may be facilitated by alignment markings (not shown) configured to align the breakable openings 112 with the corresponding breakable gas vents 106.

Example 1. A battery module (100) for a vehicle comprising a battery housing (102) holding a plurality of battery cells (104), each cell comprising a breakable gas vent (106) at an end portion of the respective battery cell; a layer of thermally insulating material (108) covering the plurality of breakable gas vents; a first abrasion resistant plate (110) arranged to cover the thermally insulating layer, the first abrasion resistant plate comprising a plurality of breakable openings (112), each breakable opening being located in alignment with a corresponding breakable gas vent; and a second abrasion resistant plate (114) arranged to cover the first abrasion resistant plate, the first and second abrasion resistant plates being configured to collectively form a vent channel (116) for guiding a gas flow expelled from any of the plurality of breakable openings.

Example 2. The battery module according to example 1, wherein the first abrasion resistant plate is arranged in contact with the thermally insulating layer

Example 3. The battery module according to example 1 or 2, wherein the thermally insulating material is configured to dissipate at a location above the gas vent if exposed to a gas exhaust through the gas vent.

Example 4. The battery module according to any one of the preceding examples, wherein the first abrasion resistant plate is formed in a single piece.

Example 5. The battery module according to any one of the preceding examples, wherein the first abrasion resistant plate comprises mica.

Example 6. The battery module according to any one of the preceding examples, wherein the first abrasion resistant plate comprises a reinforced plastic material.

Example 7. The battery module according to any one of the preceding examples, wherein the second abrasion resistant plate comprises mica.

Example 8. The battery module according to any one of the preceding examples, wherein the thermally insulating material is a foam material.

Example 9. The battery module according to any one of examples 1 to 7, wherein the thermally insulating material comprises at least one of polyurethane resin, aerogel blanket, glass fiber blanket and hollow glass fiber strings.

Example 10. The battery module according to any one of the preceding examples, wherein the breakable opening of the first abrasion resistant plate comprises a perforated region.

Example 11. The battery module according to any one of the preceding examples, further comprising a battery control component (120) arranged on each battery cell adjacent to the layer of thermally insulating material.

Example 12. The battery module (300) according to example 11, further comprising a protective barrier (302) arranged between the battery control component and the thermally insulating material.

Example 13. The battery module according to example 12, wherein the protective barrier comprises glass fiber.

Example 14. The battery module according to example 12 or 13, wherein the protective barrier comprises a hollow glass fiber cord.

Example 15. The battery module according to any one of examples 11 to 14, wherein the first abrasion resistant plate is arranged to cover the battery control component.

Example 16. The battery module according to example 15, wherein a portion of the first abrasion resistant plate arranged to cover the battery control component is elevated in relation to a portion of the first abrasion resistant plate arranged to cover the thermally insulating material.

Example 17. The battery module according to example 16, wherein the second abrasion resistant plate is substantially flat, and wherein the vent channel is formed between the second abrasion resistant plate and the portion of the first abrasion resistant plate arranged to cover the thermally insulating material.

Example 18. The battery module according to any one of the preceding examples, wherein the first and second abrasion resistant plates include alignment markings configured to facilitate alignment of the breakable openings with the corresponding breakable gas vents.

Example 19. The battery module according to any one of the preceding examples, wherein at least one of the first and second abrasion resistant plates is configured to withstand a temperature of at least 700°C.

20. A vehicle comprising a battery module according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module (100) for a vehicle comprising:
a battery housing (102) holding a plurality of battery cells (104), each cell comprising a breakable gas vent (106) at an end portion of the respective battery cell;
a layer of thermally insulating material (108) covering the plurality of breakable gas vents;
a first abrasion resistant plate (110) arranged to cover the thermally insulating layer, the first abrasion resistant plate comprising a plurality of breakable openings (112), each breakable opening being located in alignment with a corresponding breakable gas vent; and
a second abrasion resistant plate (114) arranged to cover the first abrasion resistant plate, the first and second abrasion resistant plates being configured to collectively form a vent channel (116) for guiding a gas flow expelled from any of the plurality of breakable openings.

2. The battery module according to claim 1, wherein the first abrasion resistant plate is arranged in contact with the thermally insulating layer

3. The battery module according to claim 1 or 2, wherein the thermally insulating material is configured to dissipate at a location above the gas vent if exposed to a gas exhaust through the gas vent.

4. The battery module according to any one of the preceding claims, wherein the first abrasion resistant plate is formed in a single piece.

5. The battery module according to any one of the preceding claims, wherein the thermally insulating material is a foam material.

6. The battery module according to any one of claims 1 to 5, wherein the thermally insulating material comprises at least one of polyurethane resin, aerogel blanket, glass fiber blanket and hollow glass fiber strings.

7. The battery module according to any one of the preceding claims, wherein the breakable opening of the first abrasion resistant plate comprises a perforated region.

8. The battery module according to any one of the preceding claims, further comprising a battery control component (120) arranged on each battery cell adjacent to the layer of thermally insulating material.

9. The battery module (300) according to claim 8, further comprising a protective barrier (302) arranged between the battery control component and the thermally insulating material.

10. The battery module according to claim 8 or 9, wherein the protective barrier comprises a hollow glass fiber cord.

11. The battery module according to any one of claims 8 to 10, wherein the first abrasion resistant plate is arranged to cover the battery control component.

12. The battery module according to claim 11, wherein a portion of the first abrasion resistant plate arranged to cover the battery control component is elevated in relation to a portion of the first abrasion resistant plate arranged to cover the thermally insulating material.

13. The battery module according to claim 12, wherein the second abrasion resistant plate is substantially flat, and wherein the vent channel is formed between the second abrasion resistant plate and the portion of the first abrasion resistant plate arranged to cover the thermally insulating material.

14. The battery module according to any one of the preceding claims, wherein the first and second abrasion resistant plates include alignment markings configured to facilitate alignment of the breakable openings with the corresponding breakable gas vents.

15. A vehicle comprising a battery module according to any one of the preceding claims.
